# EUROPÄISCHE PATENTSCHRIFT

(11) **EP 3 411 688 B1**
(45) Veröffentlichungstag und Bekanntmachung des Hinweises auf die Patenterteilung: **13.04.2022**
(21) Anmeldenummer: 17703370.1
(22) Anmeldetag: 01.02.2017
(51) Int. Cl.: G01N 11/08

(54) **RHEOMETER MIT ZYKLISCH VERENGENDEN UND ERWEITERNDEN QUERSCHNITT**
RHEOMETER WITH CYCLICAL NARROWING AND WIDENING CROSS SECTION
RHÉOMÈTRE AVEC UNE SECTION CONTRACTÉE ET ÉLARGIE PÉRIODIQUEMENT

(30) Priorität: 02.02.2016 DE 102016201537
(43) Veröffentlichungstag der Anmeldung: 12.12.2018
(73) Patentinhaber: Leistritz Extrusionstechnik GmbH, 90459 Nürnberg (DE)
(72) Erfinder: MIETHLINGER, Jürgen, 4851 Gampern (AT)
(74) Vertreter: Lindner Blaumeier Patent- und Rechtsanwälte
(86) Internationale Anmeldenummer: PCT/EP2017/052112
(87) Internationale Veröffentlichungsnummer: WO 2017/134084

(56) Entgegenhaltungen:
- DE-B4- 19 848 687
- JP-A- 2004 284 032
- US-A- 5 277 058
- US-A1- 2004 255 648
- E. BECKER: "Die effektive Viskosität bei viskometrischer Druck-Schlepp-Strömung mit Anwendung auf Extruder und Gleitlager", MATERIALWISSENSCHAFT UND WERKSTOFFTECHNIK., Bd. 9, Nr. 12, 31. Dezember 1978 (1978-12-31), Seiten 452-459, XP055359626, DE ISSN: 0933-5137, DOI: 10.1002/mawe.19780091210

## Beschreibung

Die Erfindung bezieht sich auf ein Rheometer, insbesondere zur Bestimmung und/oder Überwachung des Fließverhaltens von thermoplastischen Kunststoffen.

Im Einzelnen bezieht sich die Erfindung auf ein Rheometer gemäß den Merkmalen des Oberbegriffs des Anspruchs 1.

Thermoplastische Kunststoffe werden üblicherweise mittels Extrusionsverfahren oder Spritzgussverfahren verarbeitet. Zur Materialaufbereitung werden meist Compounder bzw. gleichlaufende Doppelschneckenextruder eingesetzt. Dabei erfolgt die Plastifizierung der Kunststoffe meist durch Schnecken-Plastifiziereinheiten. Die plastifizierten KunststoffSchmelzen sind in der Regel nicht-newtonsche Fluide, welche ein zeit- oder schergeschwindigkeitsabhängiges Verhalten zeigen. Dabei ist die Viskosität keine Konstante, sondern ändert sich mit dem Schergefälle. Kunststoffschmelzen und -lösungen zeigen aber auch ein komplexes dehnrheologisches Verhalten, da die Dehnviskosität von der Dehngeschwindigkeit und der Belastungszeit abhängig ist und es spezielle Effekte wie z.B. die Dehnungsverfestigung gibt. Aus z.B. H.-J. Luger, J. Miethlinger: Study of glass-fiber-reinforced polypropylene in elongational and shear rheometry. Advances in Plastics Technology Conference, Sosnowiec, Poland (2015) oder Miethlinger: Polymer Extrusion und Compounding - aktuelle Forschungsarbeiten. 24. Leobener Kunststoff-Kolloquium, Montanuniversität Leoben, Österreich (2015) ist bekannt, dass dehnrheologische Untersuchungen wichtige Zusatzinformationen im Vergleich zu reinen scherrheologischen Experimenten liefern können. Infolge dessen treten bei der Verarbeitung von thermoplastischen Kunststoffen sehr komplexe Vorgänge auf, welche sich nur bedingt mathematisch erfassen und theoretisch beschreiben lassen. Diese Vorgänge können nur bedingt simuliert oder experimentell untersucht werden, um z.B. die Qualität der Plastifizierungsvorgänge zu erfassen und zu optimieren, sowie weiter zu entwickeln. Das trifft insbesondere auf Barriereschnecken und Schnecken mit Dehnelementen zu, welche zur Plastifizierung hauptsächlich eingesetzt werden. Von besonderer Wichtigkeit sind dabei wave-screws und energy-transfer-screws.

Um die Viskosität von plastifizierten, nicht-newtonschen Materialien zu untersuchen, wurde in der DE 42 20 157 A1 eine Vorrichtung zur Viskositätsmessung vorgeschlagen, bei welcher das aus einer Extruderschnecke gefertigte Material durch einen rechteckigen Schlitz gedrückt wird. In dem kanalartigen Schlitz sind eine Vielzahl von Drucksensoren vorgesehen.

Aus der DE 34 90 044 T1 ist eine Vorrichtung zum Messen der inneren Reibung flüssiger Stoffe bekannt. Zusätzlich zu der Reibung kann mittels dieser Vorrichtung auch der Reibungskoeffizient von Flüssigkeiten bestimmt werden. Hierzu ist eine Hülse vorgesehen, durch welche die Flüssigkeit strömt. Innerhalb der Hülse kann eine Verengung vorgesehen sein, welche ähnlich einem Venturirohr arbeitet. Zur Erfassung von Messwerten sind Thermometer vorgesehen.

Eine weitere Vorrichtung zur Bestimmung rheologischer Eigenschaften von fließfähigen Substanzen zeigt die DE 195 29 578 A1. Das dort vorgeschlagene Schlitzrheometer weist einen sich verjüngenden Ringspalt auf, an welchem Druckmessungen vorgenommen werden.

Eine Vorrichtung zur Bestimmung des Druckabfalls beim Fließen plastifizierter Massen durch eine Kapillare mit definiertem Querschnitt und definierter Länge beschreibt die DE 198 46 579 C1. Dabei wird Schmelze mittels einer volumetrisch regelbaren Pumpe durch die Kapillare gepresst. Mittels Druckaufnehmer und Temperaturmessaufnehmer kann eine Überwachung der Strömungsvorgänge erfolgen.

Ein Rheometer mit einstellbarem Spalt ist aus der US 5,277,058 A vorbekannt. Mittels des Rheometers können Scherraten und Scherkräfte bestimmt werden.

Aus DE 198 48 687 B4 ist eine Vorrichtung zur simultanen Ermittlung von Scher- und Dehnviskosität von Flüssigkeiten wie Polymerschmelzen bekannt. Die Flüssigkeit wird bei diesem System durch mehrere, sich verengende oder erweiternde und einen rechteckigen Querschnitt aufweisenden Kapillaren geleitet.

JP 2004 284032 A offenbart eine Messdüse zur Bestimmung der Viskosität eines Kunstharzes, wobei ein Fließkanal mit einem rechteckigen Querschnitt vorgesehen ist, entlang dem mehrere Drucksensoren sowie ein Vorsprung oder mehrere Vorsprünge angeordnet sind.

Die aus dem Stand der Technik bekannten Rheometer können zwar spezifische Vorgänge bei der Strömung nicht-newtonscher Fluide erfassen, bedingt durch den jeweiligen Aufbau der Rheometer sind diese jedoch auf sehr singuläre Anwendungen beschränkt und gestatten es nicht, die Qualität der komplexen Vorgänge der Plastifizierung mit Knet- und Förderelementen, Barriereschnecken, wave-screws und/oder energy-transfer-screws abzubilden.

Der Stand der Technik zeigt somit unterschiedliche, kontinuierlich arbeitende Rheometer, sogenannte Extrusionsrheometer, welche einen oder mehrere Schmelzekanäle oder Fluidkanäle aufweisen. Die mehreren Kanäle sind dabei jeweils meist parallel geschaltet, um mit einem Messvorgang mehrere Messwerte mit unterschiedlichen Schergeschwindigkeiten erfassen zu können. Hierdurch können jedoch nicht die komplexen Vorgänge in Plastifizierschnecken, insbesondere Barriereschnecken, simuliert oder untersucht werden.

Der Erfindung liegt die Aufgabe zugrunde, ein Rheometer zu schaffen, welches insbesondere zur Prozessüberwachung, sowie zur Entwicklung und Erforschung von Schnecken-Plastifiziereinheiten mit Barriereschnecken, wave-screws und energy-transfer-screws und sonstigen Dehnelementen einsetzbar ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das Rheometer ein Gehäuse aufweist, in welchem zwischen einer Einlassöffnung und einer Auslassöffnung zumindest ein im Wesentlichen gradliniger Kanal ausgebildet ist. Der Kanal ist dabei mit einem rechteckigen Querschnitt versehen. Längs des Kanals sind Druckmessvorrichtungen angeordnet. Erfindungsgemäß ist der Kanal so ausgebildet, dass er über seine Länge mit einem zyklisch sich verengenden und erweiternden Querschnitt versehen ist.

Erfindungsgemäß ist vorgesehen, dass zwei zueinander parallele Kanäle vorgesehen sind, welche mittels zumindest eines Stegs voneinander getrennt sind. Der Steg bildet mit einer ihm gegenüberliegenden Gehäusewandung einen Spalt, sodass eine Strömung von einem der Kanäle in den anderen Kanal durch den Spalt möglich ist.

Um die komplexen Vorgänge in Verarbeitungsschnecken wie Barriereschnecken, wave-screws und energy-transfer-screws zu untersuchen, zu simulieren und/oder zu überwachen, ist zu beachten, dass der Strömungsvorgang in derartigen Schnecken-Plastifiziereinheiten sehr komplex ist und aus einer Überlagerung von Schleppströmungen und Druckströmungen besteht. Die Schleppströmung ist dabei eine Folge der Schneckenrotation, während die Druckströmung eine Folge des durch die Schnecke erzeugten Werkzeugwiderstands ist. Mittels des erfindungsgemäßen Rheometers können somit experimentell die Vorgänge in einer Schnecke simuliert werden, sowie die Vorteile der Dehnrheologie durch die erfindungsgemäße mehrfache Scher- und Dehnverformung der Schmelze oder Lösung vorteilhaft für die Prozessüberwachung genutzt werden.

Der Aufbau des erfindungsgemäßen Rheometers bewirkt, dass in dem nicht-newtonschen Fluid keine Schleppströmung auftritt, sondern das Druckströmungsverhalten des nicht-newtonschen Fluids entkoppelt von Schleppströmungen untersucht werden kann.

Erfindungsgemäß wird durch die Einlassöffnung plastifiziertes, fließfähiges Material eingebracht. Dies kann mittels Extrudern, Zahnradpumpen oder ähnlichem erfolgen. Zur Prozessüberwachung bei Extrusions-, Spritzguss- oder Compoundierprozessen ist es möglich, einen Teil des geförderten Materials in das Rheometer zu leiten, ggf. unter Zwischenschaltung einer zusätzlichen Pumpe.

Um die Temperatur konstant zu halten, wird es vorteilhaft sein, das Rheometer zusätzlich zu beheizen, beispielsweise auf eine Temperatur zwischen 180 und 300°C. Es ist jedoch erfindungsgemäß auch möglich, das zugeführte Material nur teilweise zu plastifizieren, um auf diese Weise auch das Aufschmelzverhalten, welches in Barriereschnecken auftritt, experimentell zu erfassen und/oder online zu überwachen.

Durch die erfindungsgemäß sich ändernden Querschnitte des Kanals ergeben sich unterschiedliche Druckverläufe, abhängig von den jeweils vorliegenden Querschnittsflächen. Hierdurch lassen sich insbesondere bei der Online-Überwachung von Produktionsvorgängen Rückschlüsse auf die Zusammensetzung und Qualität des thermoplastischen Materials ziehen. Dabei ist insbesondere auch zu beachten, dass industriell eingesetzte Materialien Zuschlagsstoffe aufweisen und somit Compounds bilden. Das Verhalten der Zuschlagsstoffe ist von verschiedenen Parametern abhängig und kann sich während des Produktionsprozesses ändern. Mittels der Online-Überwachung können derartige Veränderungen frühzeitig erkannt werden, sodass geeignete Maßnahmen zur Aufrechterhaltung einer hoch qualitativen Produktion wie z.B. Regelungskonzepte getroffen werden können.

Bei der Verwendung zweier, zueinander paralleler Kanäle ist erfindungsgemäß vorgesehen, dass die verengenden und erweiternden Querschnitte der beiden Kanäle zueinander unterschiedlich sind. Dies bedeutet, dass, beginnend mit der Einlassöffnung, der Querschnitt des einen Kanals sich verengt, während der Querschnitt des anderen Kanals sich erweitert. Somit herrschen, bezogen auf die jeweilige Kanallänge oder Lauflänge des Kanals unterschiedliche Druckverhältnisse in den beiden Kanälen, die zu einem unterschiedlichen Überströmverhalten des Fluids durch den Spalt des Stegs führen. Dabei kann erfindungsgemäß der Spalt über die gesamte Länge der Kanäle eine gleiche Höhe aufweisen. Es ist jedoch auch möglich, die Spalt-Höhe zu variieren.

In besonders günstiger Weiterbildung der Erfindung kann vorgesehen sein, dass der Steg eine profilierte Oberkante aufweist. Durch diese profilierte Oberkante, welche rechteckig, hyperbelförmig, wellenartig oder in anderer Dimensionierung ausgebildet sein kann, ergeben sich unterschiedliche Strömungsverhältnisse von einem Kanal in den anderen. Somit ist das erfindungsgemäße Rheometer universell einsetzbar, um komplexe Strömungsverhältnisse experimentell zu ermitteln.

Der Steg kann erfindungsgemäß demontierbar ausgebildet sein, sodass bei gleichbleibenden Kanalstrukturierungen unterschiedliche Überströmungsverhältnisse von einem Kanal zu dem anderen Kanal erreicht werden können.

In bevorzugter Weiterbildung der Erfindung ist vorgesehen, dass die verengenden und erweiternden Querschnitte des Kanals durch eine profilierte Kanalwandung gebildet werden.

Dies bedeutet, dass eine der Wandungen des bevorzugterweise mit einem rechteckigen Querschnitt ausgebildeten Kanals profiliert ist, beispielsweise im Seiten-Querschnitt sinusartig, trapezartig, sägezahnartig oder ähnlich. Drei Seitenwände des Kanals werden dabei eben und über die Lauflänge des Kanals unverändert ausgebildet, während die vierte Wandung mit der Profilierung versehen ist. Der Schlitz des Steges ist dabei bevorzugter Weise der nichtprofilierten Wandung des Kanals zugeordnet.

Erfindungsgemäß weist das erfindungsgemäße Rheometer somit zwei zueinander parallele Kanäle auf. Erfindungsgemäß ist es jedoch auch möglich, eine größere Anzahl an Kanälen, beispielsweise vier Kanäle vorzusehen, die parallel zueinander verlaufen und die jeweils über einen Steg voneinander getrennt sind, der mit einem Überström-Spalt versehen ist. Somit ist eine Überströmung des Fluids von einem Kanal in einen benachbarten Kanal möglich. Dies simuliert die Vorgänge bei speziellen Bauformen von Barriereschnecken, wave-screws und/oder energy-transfer-screws, sodass das Druck-Durchsatzverhalten dieser Schnecken experimentell ermittelt werden kann. Da bei dem erfindungsgemäßen Rheometer keine Schleppströmung vorhanden ist, können die Messdaten einfacher interpretiert und den auftretenden physikalischen Vorgängen zugeordnet werden. Hierdurch ergeben sich zahlreiche Möglichkeiten, wie beispielsweise die Erfassung des Einflusses des Überström-Stegs, der wave-Ausführung der Schmelzekanäle oder des Stoffverhaltens des Fluids, inklusive der Dehnviskosität, auf das Druck-Durchsatzverhalten. Die mehrfache Scher- und Dehndeformation ermöglicht zusätzlich die Vorteile der Dehnrheometrie für die Prozessanalytik und -überwachung in besonderer Weise nutzen zu können.

Das erfindungsgemäße Rheometer kann somit zur Simulation unterschiedlichster Vorgänge eingesetzt werden, einschließlich der Untersuchung der Eigenschaften der beteiligten Fluide. Entsprechend eignet sich das Rheometer zur laufenden Prozessüberwachung, um während eines Fertigungsprozesses auftretende Änderungen der Eigenschaften der Materialien ermitteln zu können. Hierdurch ist eine hochqualitative und reproduzierbare Qualität der Produktionsvorgänge möglich.

Die Dimensionierung der Kanäle des erfindungsgemäßen Rheometers kann den jeweiligen Gegebenheiten angepasst werden. Dabei kann es günstig sein, wenn die Breite des Kanals wesentlich größer ist, als die Höhe des Kanals, bezogen auf den jeweiligen Kanalquerschnitt. Die Breite kann dabei größer oder gleich dem Faktor 5 oder dem Faktor 10 der Kanalhöhe sein. Hierdurch wird ein zuverlässiges Fließverhalten ebenso sichergestellt, wie eine zuverlässige Durchströmung des Kanals in Analogie zu den Strömungsverhältnissen, die in einer Schnecke auftreten. Die um einen Faktor zwischen 5 und 10 größere Breite des Kanals, bezogen auf dessen Höhe, berücksichtigt die Wandhaftung und Wandreibung des Fluids und dient zur verbesserten Simulation der Strömungsverhältnisse.

Um die Strömungsvorgänge in einer Schnecke, insbesondere einer Barriereschnecke simulieren zu können und die Vorteile der Dehnrheometrie für die Prozessanalytik und - Überwachung in besonderer Weise nutzen zu können, kann es günstig sein, wenn der Kanal über seine Gesamtlänge zwischen ein und fünfzehn verengende und erweiternde Querschnitte, bevorzugt in gleicher Anzahl, aufweist.

Der erfindungsgemäße Steg, der benachbarte Kanäle voneinander trennt, kann eine Breite zwischen 3 mm und 20 mm aufweisen.

Das erfindungsgemäße Rheometer ist somit hinsichtlich seines Aufbaus und seiner Wirkungsweise geeignet, Geometrien nachzubilden, die insbesondere in Barriereschnecken, wave-screws und/oder energy-transfer-screws auftreten und neben unterschiedlichen Schergeschwindigkeits- auch Dehngeschwindigkeitsprofile im zu untersuchenden Material zu erzeugen, sodass diese Strömungsvorgänge im Rheometer geringste Qualitätsschwankungen des Materials durch zeitliche Veränderungen der Drucksignale erfassen kann. Durch den Schlitz, welchen der Steg mit der Innenwandung des Rheometers bildet, sind Druckströmungsvorgänge darstellbar, welche den realen Bedingungen in den beschriebenen Schnecken identisch sind oder zumindest sehr nahe kommen. Hierdurch lässt sich das Rheometer sowohl zur Grundlagenforschung, als auch zur laufenden Prozessüberwachung besonders bevorzugt einsetzen.

Im Folgenden wird die Erfindung anhand von Ausführungsbeispielen in Verbindung mit der Zeichnung beschrieben. Dabei zeigt:
- Figur 1: eine perspektivische Teil-Ansicht eines ersten Ausführungsbeispiels des erfindungsgemäßen Rheometers,
- Figur 2: eine Schnittansicht des in Figur 1 gezeigten Rheometers,
- Figur 3: eine perspektivische Darstellung, analog Figur 1,
- Figuren 4a bis 4c: vereinfachte Querschnittsformen des erfindungsgemäßen Stegs,
- Figur 5: eine vereinfachte Draufsicht auf die Darstellung gemäß Figur 1, und
- Figuren 6 bis 8: Beispiele unterschiedlicher Profilierungen der Kanalwandung.

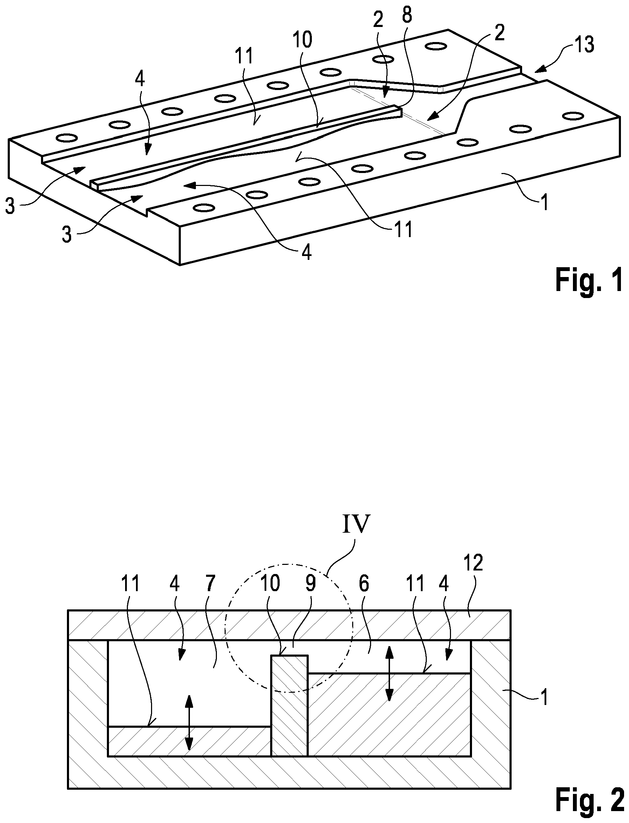

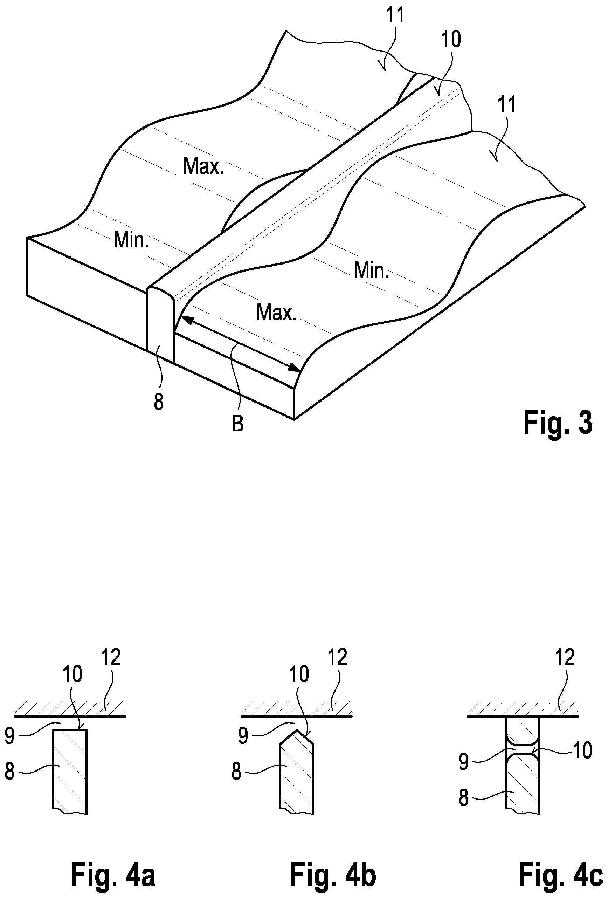

Die Figur 1 zeigt ein Ausführungsbeispiel eines erfindungsgemäßen Rheometers im geöffneten Zustand. Die Figur 2 zeigt hierzu zur Erläuterung eine Schnittansicht. Das Rheometer weist ein Gehäuse 1 auf, in welchem zwei zueinander parallele Kanäle 4 ausgebildet sind. Diese werden durch einen Steg 8 voneinander getrennt, welcher demontierbar ausgebildet sein kann. Der Steg 8 weist eine Oberkante 10 auf, welche einen Abstand zur Innenwandung einer Deckelplatte 12 ausbildet. Hierdurch entsteht ein Spalt 9, siehe insbesondere Figur 2 und Figuren 4a bis 4c.

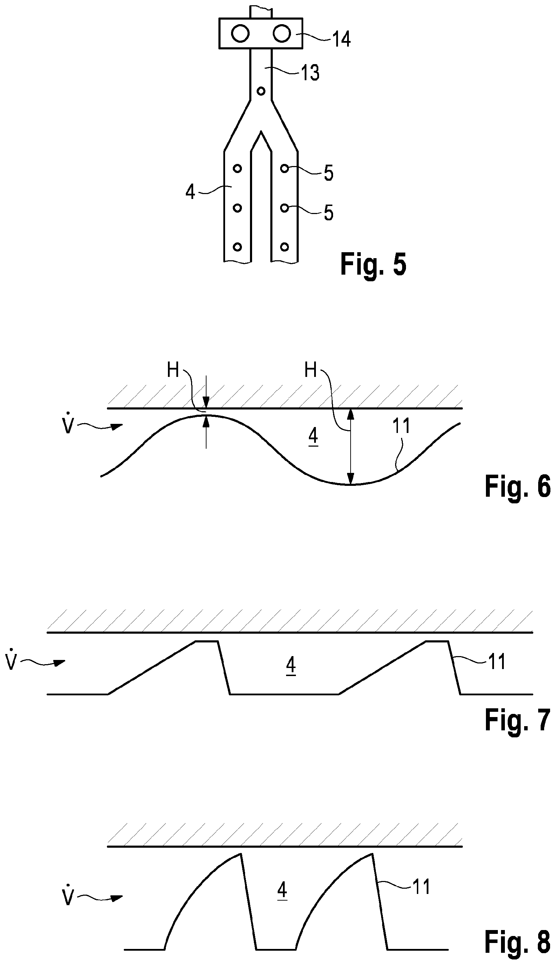

Wie die Figur 1 zeigt, ist das Gehäuse mit einem Einströmverteiler 13 versehen, welcher eine einströmende Fluidmasse auf Einlassöffnungen 2 der beiden parallelen Kanäle 4 verteilt. Das Fluid durchströmt somit die Kanäle 4 und tritt durch Auslassöffnungen 3 aus. Zur Verdeutlichung ist die Anordnung in Figur 5 nochmals dargestellt. Die Figur 5 zeigt auch eine zusätzliche Pumpe 14, die zur Förderung des Fluids vorgesehen sein kann.

Im Bereich der Kanäle sind, wie in Figur 5 dargestellt, Druckmessvorrichtungen 5 vorgesehen. Zusätzlich können auch nicht dargestellte Temperaturmessvorrichtungen vorgesehen sein.

Wie sich insbesondere aus den Figuren 1 bis 3 ergibt, weisen die Kanäle 4 jeweils unterschiedliche Kanalquerschnitte auf. Bei gleichbleibender Breite B der Kanäle führt dies somit zu einer sich ändernden Höhe H des jeweiligen Kanals bzw. des sich aus der Breite B und der Höhe H ergebenden effektiven Kanalquerschnitts.

Die unterschiedlichen Profilierungen der gemäß Figur 1 unteren Wandung der Kanäle 4 ist aus der Schnittansicht der Figur 2 ersichtlich. Diese zeigt insbesondere auch verdeutlichend den Spalt 9, welcher zwischen der Oberkante 10 und der Deckelplatte 12 ausgebildet ist. Es versteht sich, dass die durchströmende Fluidmasse, abhängig von dem jeweiligen Kanalquerschnitt, unterschiedliche Drücke aufweist, die somit auch zu einem unterschiedlichen Überströmverhalten durch den Spalt 9 führen.

Die Profilierung der Wandung des Kanals 4 bildet somit, wie in Figur 3 dargestellt, Minima und Maxima. Die Figuren 6 bis 8 zeigen hierzu unterschiedliche mögliche Profilierungen. Gemäß Figur 6 erfolgt die Profilierung, wie auch in den Figuren 1 und 3 dargestellt, sinusförmig, während die Figuren 7 und 8 ein trapezförmiges oder sägezahnartiges Profil zeigen. Daraus ist ersichtlich, dass, bezogen auf die Strömungsrichtung, welche gemäß dem Pfeil der Figuren 6 bis 8 von links erfolgt, ein langsamerer Anstieg der Reduzierung des Kanalquerschnitts erfolgt, welcher mit einem langsameren Druckanstieg verbunden ist. Folgend auf das Maximum mit dem geringsten Kanalquerschnitt erfolgt gemäß den Figuren 7 und 8 eine relativ schnelle Querschnittserhöhung.

Bei den gezeigten Ausführungsbeispielen kann die Gesamtlänge des jeweiligen Kanals zwischen 100 mm und 400 mm betragen. Die Breite B des Kanals kann zwischen 15 und 40 mm sein, während die geringste Höhe bei einem Maximum der Strukturierung der Kanalwandung (Figur 3) 0,6 bis 2,0 mm betragen kann. Die maximale Höhe bei einer minimalen Profilierung kann zwischen 3,0 und 8,0 mm betragen, so wie dies auch in Figur 6 dargestellt ist. Abhängig von den zu untersuchenden oder zu überwachenden Geometrien und den jeweiligen Eigenschaften des Fluids kann erfindungsgemäß über die Gesamtlänge des Kanals zwischen einem und fünfzehn Maxima und einem und fünfzehn Minima des Kanalquerschnitts alternierend gewechselt werden. Diese verengenden Querschnitte 6 und erweiternden Querschnitte 7 (siehe Figur 2) sind bevorzugter Weise jeweils alternierend in benachbarten Kanälen ausgebildet, sodass in einem Kanal ein Druckmaximum herrscht, während in dem anderen Kanal bei gleicher Lauflänge ein Druckminimum ausgebildet wird.

Die Figuren 4a bis 4c zeigen unterschiedliche Profilierungen der Oberkante 10 des Stegs 8. Während die Figur 4a eine rechteckige Form mit einer planen Oberkante 6 zur Ausbildung des Spalts 9 bildet, ist die Oberkante 10 gemäß Figur 4b hyperbolisch abgerundet. Es ist auch möglich, über die Breite des Stegs eine wellenförmige Strukturierung der Oberkante vorzusehen. Die Figur 4c zeigt eine weitere Variante, bei welcher ein oberer und ein unterer Steg zum Einsatz gelangen, wobei der Spalt 9 sich im mittleren Bereich des Steges befinden kann. Wie erläutert, ist es auch möglich, den Steg 8 über seine Länge variabel auszugestalten, sodass auch über den Steg Dehnströmungsvorgänge erzeugt werden können.

Das Rheometer kann in unterschiedlichen Einbaulagen eingesetzt werden, um eine praxisnahe Simulation oder Überwachung der Vorgänge einer Plastifiziereinheit oder einer Schnecke durchzuführen.

Das erfindungsgemäße Rheometer ermöglicht somit eine experimentelle Schneckensimulation, insbesondere zur experimentellen Bestimmung des Druck-Durchsatzverhaltens. Da bei dem erfindungsgemäßen wave-Rheometer keine Schleppströmung entsteht, kann das Druckströmungsverhalten des Fluids entkoppelt von Schleppströmungen untersucht werden. Dies ermöglicht eine einfacherere Interpretation der Messdaten sowie der zugehörigen physikalischen Vorgänge. Durch geeignete Temperaturführung ist es auch möglich, die Zuführung des Fluids in nur zum Teil plastifiziertem Zustand vorzusehen, um das Aufschmelzverhalten experimentell zu erfassen und zu analysieren. Insgesamt ermöglicht das Rheometer eine Untersuchung des Dehnströmungsverhaltens der Fluide. Ein besonders wichtiger Aspekt der Erfindung liegt darin, mittels des Rheometers einen laufenden Produktionsprozess zu überwachen, um auf Veränderungen der Eigenschaften des Fluids reagieren zu können. Es versteht sich von selbst, dass das wave-Rheometer zur Prozessüberwachung unterschiedlichster Fluidtypen und Fluidverarbeitungsmaschinen eingesetzt werden kann, also auch für Prozesse ohne Plastifizierung.

## Patentansprüche

1. Rheometer zur Bestimmung und/oder Überwachung des Fließverhaltens von viskosen Fluiden, insbesondere Kunststoffschmelzen und -lösungen, mit einem Gehäuse (1), in welchem zwischen einer Einlassöffnung (2) und einer Auslassöffnung (3) zumindest ein im Wesentlichen gradliniger Kanal (4) ausgebildet ist, wobei der Kanal (4) einen rechteckigen Querschnitt aufweist, sowie mit mehreren längs des Kanals (4) angeordneten Druckmessvorrichtungen (5), wobei der Kanal (4) über seine Länge mit einem zyklisch sich verengenden (6) und erweiternden (7) Querschnitt versehen ist, **dadurch gekennzeichnet, dass** zwei zueinander parallele Kanäle (4) ausgebildet sind, welche mittels zumindest eines Stegs (8) voneinander getrennt sind, wobei der Steg (8) mit einer Gehäusewandung einen Spalt (9) bildet, wobei die verengenden (6) und erweiternden (7) Querschnitte paralleler Kanäle (4), bezogen auf die jeweilige Kanallänge, zueinander unterschiedlich sind.

2. Rheometer nach Anspruch 1, **dadurch gekennzeichnet, dass** der Steg (8) eine profilierte Oberkante (10) aufweist.

3. Rheometer nach Anspruch 1 oder 2, **dadurch gekennzeichnet, dass** der verengende (6) und erweiternde (7) Querschnitt des Kanals (4) durch eine profilierte Kanalwandung (11) gebildet wird.

4. Rheometer nach Anspruch 3, **dadurch gekennzeichnet, dass** die Kanalwandung (11) im Querschnitt sinusartig, trapezartig oder sägezahnartig ausgebildet ist.

5. Rheometer nach einem der vorangehenden Ansprüche, **dadurch gekennzeichnet, dass** die Kanalwandung (11) über ihre Länge mehrere verengende (6) und erweiternde (7) Querschnitte aufweist.

6. Rheometer nach einem der vorangehenden Ansprüche, **dadurch gekennzeichnet, dass** der Kanal (4) eine Breite (B) aufweist, welche der Gleichung B ≥ 5 H genügt, wobei H als Höhe des Kanals (4) definiert ist, wobei insbesondere B ≥ 10 H sein kann.

7. Rheometer nach einem der vorangehenden Ansprüche, **dadurch gekennzeichnet, dass** der Kanal (4) über seine Länge zwischen ein und fünfzehn verengende (6) und erweiternde (7) Querschnitte in bevorzugt gleicher Anzahl aufweist.

8. Rheometer nach einem der vorangehenden Ansprüche, **dadurch gekennzeichnet, dass** der Steg (8) demontierbar ausgebildet ist.

## Claims

1. Rheometer for determining and/or monitoring the flow behaviour of viscous fluids, in particular plastic melts and plastic solutions, having a housing (1) in which at least one substantially rectilinear channel (4) is formed between an inlet opening (2) and an outlet opening (3), wherein the channel (4) has a rectangular cross section, and having multiple pressure-measuring devices (5) arranged along the channel (4), wherein the channel (4) is provided over its length with a cyclically narrowing (6) and widening (7) cross section, **characterized in that** two channels (4) are formed which are parallel to each other and which are separated from each other by means of at least one web (8), wherein the web (8) forms, together with a housing wall, a gap (9), wherein the narrowing (6) and widening (7) cross sections of parallel channels (4) are different from each other in relation to the respective channel length.

2. Rheometer according to Claim 1, **characterized in that** the web (8) has a profiled top edge (10).

3. Rheometer according to Claim 1 or 2, **characterized in that** the narrowing (6) and widening (7) cross section of the channel (4) is formed by a profiled channel wall (11) .

4. Rheometer according to Claim 3, **characterized in that** the channel wall (11), in cross section, has a sinusoidal, trapezoidal or sawtooth-like shape.

5. Rheometer according to one of the preceding claims, **characterized in that** the channel wall (11) has multiple narrowing (6) and widening (7) cross sections over its length.

6. Rheometer according to one of the preceding claims, **characterized in that** the channel (4) has a width (B) which satisfies the equation B ≥ 5 H, where H is defined as the height of the channel (4), wherein in particular B can be ≥ 10 H.

7. Rheometer according to one of the preceding claims, **characterized in that** the channel (4) has, over its length, between one and fifteen narrowing (6) and widening (7) cross sections, preferably of equal number.

8. Rheometer according to one of the preceding claims, **characterized in that** the web (8) is designed to be detachable.

## Revendications

1. Rhéomètre servant à déterminer et/ou à surveiller le comportement d'écoulement de fluides visqueux, en particulier de masses fondues et de solutions de matière plastique, comprenant un boîtier (1) dans lequel au moins un conduit (4) substantiellement linéaire est réalisé entre une ouverture d'entrée (2) et une ouverture de sortie (3), le conduit (4) présentant une section transversale rectangulaire, ainsi que comprenant plusieurs dispositifs de mesure de pression (5) disposés le long du conduit (4), le conduit (4) étant sur sa longueur muni d'une section transversale se rétrécissant (6) et s'élargissant (7) de manière cyclique,
**caractérisé en ce que** deux conduits (4) parallèles l'un à l'autre sont réalisés, qui sont séparés l'un de l'autre au moyen d'au moins une entretoise (8), l'entretoise (8) formant un interstice (9) avec une paroi de boîtier, les sections transversales se rétrécissant (6) et s'élargissant (7) de conduits parallèles (4) étant différentes l'une de l'autre en ce qui concerne la longueur de conduit respective.

2. Rhéomètre selon la revendication 1, **caractérisé en ce que** l'entretoise (8) présente un bord supérieur profilé (10).

3. Rhéomètre selon la revendication 1 ou 2, **caractérisé en ce que** la section transversale se rétrécissant (6) et s'élargissant (7) du conduit (4) est formée par une paroi de conduit (11) profilée.

4. Rhéomètre selon la revendication 3, **caractérisé en ce que** la paroi de conduit (11) est réalisée en section transversale de manière sinusoïdale, trapézoïdale ou en dents de scie.

5. Rhéomètre selon l'une quelconque des revendications précédentes, **caractérisé en ce que** la paroi de conduit (11) présente sur sa longueur plusieurs sections transversales se rétrécissant (6) et s'élargissant (7).

6. Rhéomètre selon l'une quelconque des revendications précédentes, **caractérisé en ce que** le conduit (4) présente une largeur (B) qui satisfait l'équation B ≥ 5 H, H étant définie comme la hauteur du conduit (4), en particulier B ≥ 10 H étant possible.

7. Rhéomètre selon l'une quelconque des revendications précédentes, **caractérisé en ce que** le conduit (4) présente sur sa longueur entre une et quinze sections transversales se rétrécissant (6) et s'élargissant (7), de préférence de même nombre.

8. Rhéomètre selon l'une quelconque des revendications précédentes, **caractérisé en ce que** l'entretoise (8) est réalisée de façon démontable.
